# EUROPÄISCHE PATENTANMELDUNG

(11) **EP 1 394 926 A1**
(43) Veröffentlichungstag der Anmeldung: **03.03.2004**
(21) Anmeldenummer: 02019548.3
(22) Anmeldetag: 02.09.2002
(51) Int. Cl.: H02K 37/16, H02K 1/14

(54) **Herstellungsverfahren eines Stators für einen Schrittmotor mit dauermagnetischen Scheibenläufer, sowie entsprechend hergestellter Stator und Motor**

(71) Anmelder: Schärer Schweiter Mettler AG, 8812 Horgen (CH)
(72) Erfinder: Schaad, Marc, 5600 Lenzburg (CH)
(74) Vertreter: Dittrich, Horst, Dr.

(57) **Zusammenfassung**

Ein Stator (2) für einen Schrittmotor mit dauermagnetischem Scheibenlaufer weist Spulen für die Erzeugung eines alternierenden Magnetfeldes und Magnetkreise auf, welche durch jochförmige einen Luftspalt (7) aufweisende Blechlamellen (5) gebildet werden. Die Blechlamellen (5) werden mit einem Einstufenverfahren, vorzugsweise Aluminium-Druckguß, zum Stator (2) vergossen. Das alternierende Magnetfeld wirkt über den Luftspalt (7) auf eine auf einer drehbaren Welle (3) befestigte Magnetscheibe (2), welche zusammen mit der Welle (3) den Scheibenlaüfer (1) des Schrittmotors bildet.

## Beschreibung

Die vorliegende Erfindung betrifft ein Verfahren zur Herstellung eines Stators für einen Scheibenmagnet-Schrittmotor, welcher Spulen für die Erzeugung eines alternierenden Magnetfeldes und durch jochförmige, einen Luftspalt aufweisende Blechlamellen gebildete Magnetkreise aufweist.

Genau wie bei Syncron- und Asyncronmotoren besteht auch ein Schrittmotor aus einem fest stehenden Stator und einem in diesem drehenden Rotor. Je nach Ausbildung von Rotor und/oder Stator unterscheidet man zwischen Reluktanz-, Permanentmagnet-, Hybrid-, Scheibenmagnet-Schrittmotor und Linearmotor, wobei sich der Scheibenmagnet-Schrittmotor vor allem durch hohe Drehzahlen und hohe Leistungsdichte auszeichnet.

Hohe Drehzahlen erfordern schnell alternierende Magnetfelder, welche Verluste im Magnetkreis zur Folge haben. Diese Verluste erzeugen wiederum eine Erwärmung des Stators und Rotors, wodurch der Wirkungsgrad des Motors reduziert wird. Um die Verluste im Magnetkreis möglichst gering zu halten und somit den Wirkungsgrad möglichst nicht zu reduzieren, werden als Blechlamellen geschichtete Dynamoblechpakete eingesetzt, welche wesentlich geringere Wirbelstromverluste aufweisen als andere Materialien. Der Stator besteht heute vielfach aus einem Träger aus einem Kunststoffmaterial (siehe beispielsweise US-A-4 330 727), in den die Dynamobleche einzeln eingeklebt oder eingepresst werden.

Durch die Erfindung soll nun ein Verfahren zur Herstellung eines Stators für einen Scheibenmagnet-Schrittmotor angegeben werden, das gegenüber den bekannten Verfahren einfacher und kostengünstiger ist und die Herstellung eines für möglichst hohe Drehzahlen geeigneten Stators ermöglicht.

Diese Aufgabe wird erfindungsgemäss dadurch gelöst, dass die Blechlamellen in einem Einstufenverfahren zum Stator vergossen werden.

Eine erste bevorzugte Ausführungsform des erfindungsgemässen Verfahrens ist dadurch gekennzeichnet, dass das Vergiessen der Blechlamellen in einem Druckgussverfahren erfolgt.

Das einstufige Druckgussverfahren ermöglicht eine wesentlich rationellere und kostengünstigere Herstellung des Stators als das bisherige Einkleben oder Einpressen der Blechlamellen in den Kunstoffträger.

Gemäss einer zweiten bevorzugten Ausführungsform erfolgt das Vergiessen der Blechlamellen in einem Aluminium-Druckgussverfahren.

Bei dieser bevorzugten Ausführungsform werden also die Zwischenräume zwischen den Blechlamellen mit Aluminium ausgegossen, was den zusätzlichen Vorteil einer besseren Temperaturabführung ergibt.

Eine dritte bevorzugte Ausführungsform des erfindungsgemässen Verfahrens ist dadurch gekennzeichnet, dass die Blechlamellen zu einem rotationssymmetrischen Körper vergossen werden. Vorzugsweise werden erforderliche Befestigungslöcher, Gewinde und dergleichen des Stators beim Gussprozess hergestellt.

Die Erfindung betrifft weiter einen Stator für einen Scheibenmagnet-Schrittmotor, mit Spulen für die Erzeugung eines alternierenden Magnetfeldes und mit durch jochförmige Blechlamellen gebildeten Magnetkreisen, welche einen Luftspalt aufweisen, über den das Magnetfeld auf eine auf einer drehbaren Welle befestigte Magnetscheibe wirkt. Erfindungsgemäss ist der Stator durch Vergiessen der Blechlamellen in einem Gussverfahren hergestellt.

Eine erste bevorzugte Ausführungsform des erfindungsgemässen Stators ist dadurch gekennzeichnet, dass die Blechlamellen durch geschichtete Dynamoblechpakete gebildet sind.

Gemäss einer zweiten bevorzugten Ausführungsform weisen die Blechlamellen Aussparungen für den Durchtritt der Vergussmasse auf.

Diese bevorzugte Ausführungsform des Stators hat den Vorteil, dass sich die Vergussmasse besser zu einem stabilen Körper bildet.

Die Erfindung betrifft weiter einen Scheibenmaget-Schrittmotor. Dieser ist gekennzeichnet durch einen Stator der erfindungsgemässen Art.

Im Folgenden wird die Erfindung an Hand eines Ausführungsbeispiels und der Zeichnungen näher erläutert; es zeigt:
- Fig. 1: eine perspektivische Ansicht der wesentliche Teile eines erfindungsgemässen Scheibenmagnet-Schrittmotors bei geschlossenem Stator; und
- Fig 2: eine perspektivische Ansicht des Motors von Fig. 1 bei aufgeschnittenem Stator.

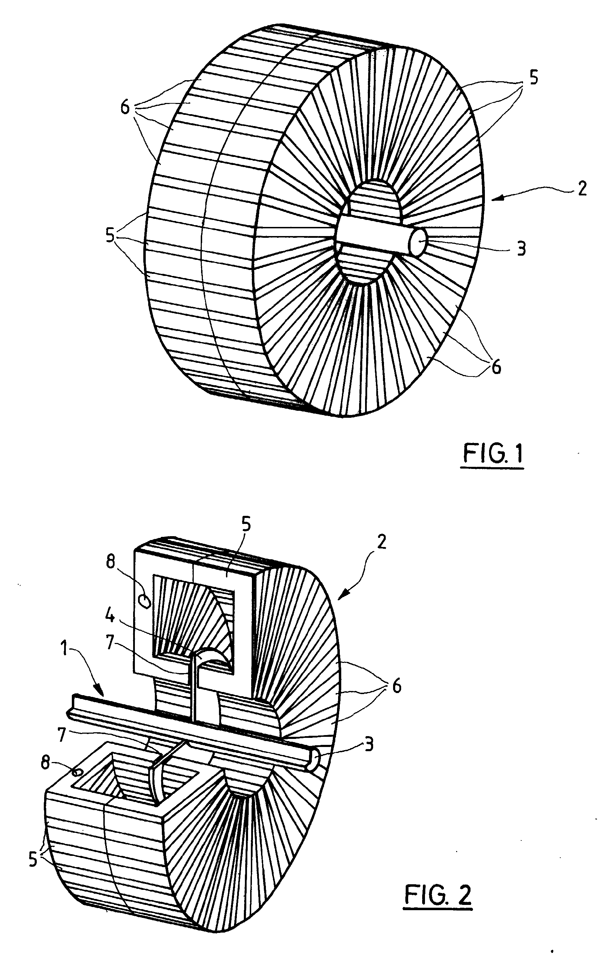

Die Figuren 1 und 2 zeigen den Rotor 1 und den Stator 2 eines Scheibenmagnet-Schrittmotors. Der Rotor ist durch eine auf der Motorwelle 3 befestigte Magnetscheibe 4 gebildet, die in axialer Richtung magnetisiert ist und in radialer Richtung eine Mehrzahl magnetischer Pole abwechselnder Polarität aufweist, die regelmässig entlang eines ringförmigen Bereichs angeordnet sind. Der Stator 2 besteht aus zu einem Ring zusammengepackten Blechlamellen 5 von jochoder rahmenartiger Form, wobei die Blechlamellen paketweise angeordnet sind und zwischen den einzelnen Paketen ein Füllmaterial 6 vorgesehen ist.

Jedem Paket von Blechlamellen 5 ist mindestens eine Spule (nicht dargestellt) für die Erzeugung eines Magnetfeldes in dem betreffenden Lamellenpaket zugeordnet. Die Blechlamellen 5 weisen an ihrem der Motorwelle 3 zugewandten Schenkel einen Spalt 7 auf und sind so positioniert, dass die Spalten 7 aller Blechlamellen fluchten und einen Schlitz bilden, in welchem die Magnetscheibe 4 läuft. Wenn in einem Lamellenpaket ein Magnetfeld erzeugt wird, so wirkt dieses über den genannten Schlitz auf die Magnetscheibe 4.

Das den Rotor 1 antreibende Drehmoment entsteht durch unterschiedlich ausgerichtete Magnetfelder in Stator 2 und Rotor 1, wobei sich der Rotor 1 immer so dreht, dass sich der grösstmögliche magnetische Fluss ausbildet. Die Drehbewegung entsteht durch gezieltes Ein- und Ausschalten einzelner Wicklungen der im Stator 2 angeordneten Spulen.

Das Füllmaterial 6 ist Aluminium und der Stator 2 ist in einem Aluminium-Druckgussverfahren in einem Einstufenprozess hergestellt, bei welchem die Blechlamellen 5 zum Stator 2 vergossen werden. Die einzelnen Blechlamellen 5 weisen Aussparungen 8 für den Durchtritt der Vergussmasse auf, so dass sich die Vergussmasse besser zu einem stabilen Körper bildet, was die Stabilität des Stators 2 erhöht. Eventuell erforderliche Befestigungslöcher, Gewinde und dergleichen im Stator 2 werden beim Druckgussprozess hergestellt, so dass sich eine spätere spanabhabende Bearbeitung des Stators erübrigt.

Der dargestellte Stator 2 ist rationell und kostengünstig herstellbar und hat durch die Verwendung von Aluminium als Vergussmasse den zusätzlichen Vorteil einer sehr guten Temperaturabführung. Ausserdem ist er mechanisch sehr stabil, weil durch die Aussparungen 8 zwischen den einzelnen Schichten der Vergussmasse eine Verbindung besteht.

## Patentansprüche

1. Verfahren zur Herstellung eines Stators (2) für einen Scheibenmagnet-Schrittmotor, welcher Spulen für die Erzeugung eines alternierenden Magnetfeldes und durch jochförmige, einen Luftspalt (6) aufweisende Blechlamellen (5) gebildete Magnetkreise aufweist, **dadurch gekennzeichnet, dass** die Blechlamellen (5) in einem Einstufenverfahren zum Stator vergossen werden.

2. Verfahren nach Anspruch 1, **dadurch gekennzeichnet, dass** das Vergiessen der Blechlamellen (5) in einem Druckgussverfahren erfolgt.

3. Verfahren nach Anspruch 1 oder 2, **dadurch gekennzeichnet, dass** das Vergiessen der Blechlamellen (5) in einem Aluminium-Druckgussverfahren erfolgt.

4. Verfahren nach Anspruch 3, **dadurch gekennzeichnet, dass** die Blechlamellen (5) zu einem rotationssymmetrischen Körper vergossen werden.

5. Verfahren nach einem der Ansprüche 1 bis 4, **dadurch gekennzeichnet, dass** erforderliche Befestigungslöcher, Gewinde und dergleichen des Stators beim Gussprozess hergestellt werden.

6. Stator für einen Scheibenmagnet-Schrittmotor, mit Spulen für die Erzeugung eines alternierenden Magnetfeldes und mit durch jochförmige Blechlamellen (5) gebildeten Magnetkreisen, welche einen Luftspalt (6) aufweisen, über den das Magnetfeld auf eine auf einer drehbaren Welle (3) befestigte Magnetscheibe (4) wirkt, **dadurch gekennzeichnet, dass** der Stator (2) durch Vergiessen der Blechlamellen (5) in einem Gussverfahren hergestellt ist.

7. Stator nach Anspruch 6, **dadurch gekennzeichnet, dass** die Blechlamellen (5) in einem Aluminium-Druckgussverfahren vergossen sind.

8. Stator nach Anspruch 7, **dadurch gekennzeichnet, dass** die Blechlamellen (5) durch geschichtete Dynamoblechpakete gebildet sind.

9. Stator nach einem der Ansprüche 6 bis 8, **dadurch gekennzeichnet, dass** die Blechlamellen (5) Aussparungen (8) für den Durchtritt der Vergussmasse aufweisen.

10. Scheibenmagnet-Schrittmotor, **gekennzeichnet durch** einen Stator (2) nach einem oder mehreren der Ansprüche 6 bis 8.
